# EUROPÄISCHE PATENTANMELDUNG

(11) **EP 1 182 080 A1**
(43) Veröffentlichungstag der Anmeldung: **27.02.2002**
(21) Anmeldenummer: 01108543.8
(22) Anmeldetag: 05.04.2001
(51) Int. Cl.: B60P 1/44

(54) **Faltbare Ladebordwand**

(30) Priorität: 14.04.2000 DE 10018609
(71) Anmelder: Peter Maier Leichtbau GmbH, 78224 Singen (DE)
(72) Erfinder: Maier, Peter, 78256 Steisslingen (DE)
(74) Vertreter: Weiss, Peter, Dr.

(57) **Zusammenfassung**

Bei einer faltbare Ladebordwand aus zumindest zwei Plattformprofilen (1.2, 1.3), welche gelenkig miteinander verbunden sind, soll zumindest einer Unterfläche (29) eines Plattformprofils (1.3) eine Stützfläche (30) zugeordnet ist, welche bei waagerechter Anordnung des Plattformprofils (1.3) in einem spitzen Winkel (v) zur Vertikalen (31) verläuft. Diese Stützfläche (30) soll mit einem Keil (32) zusammenwirken, der sich andererseits gegen eine Gegenfläche (37) abstützt, welche der Unterfläche des anderen Plattformprofils (1.2) im Bereich der gelenkigen Verbindung (2) zugeordnet ist.

## Beschreibung

Die Erfindung betrifft eine faltbare Ladebordwand aus zumindest zwei Plattformprofilen, welche gelenkig miteinander verbunden sind.

Ladebordwände sind in vielfältiger Form und Ausführung bekannt. Sie bilden meist die Rückwand von Lastkraftwagen und können aus dieser senkrechten Lage in eine waagerechte Lage gebracht und dann abgesenkt werden. Auf diese Weise kann ein LKW be- bzw. entladen werden.

Im vorliegenden Fall geht es um faltbare Ladebordwände, die nicht so sehr eine Rückwand eines LKW bilden und deshalb ausserhalb der Gebrauchslage gefaltet werden können. Eine faltbare Ladebordwand ist beispielsweise in der US 4 939 828 dargestellt, wobei zwei Plattformprofile über ein Drehgelenk bzw. eine Gelenklasche miteinander verbunden sind.

Schwierigkeiten ergeben sich bei den bisher bekannten faltbaren Ladebordwänden zum einen in der Ausrichtung der einzelnen Plattformprofile zueinander. Ferner sind die einzelnen Plattformprofile relativ schwer, so dass zum Falten erhebliche Kraft aufgewendet werden muss. Es gibt jedoch Vorschriften, nach denen ein Fahrer nur eine bestimmte Kraft zum Heben aufwenden soll, wobei das Gewicht der Plattformprofile üblicherweise wesentlich über dieser Kraft liegt.

Deshalb wird beispielsweise in der DE 297 07 803 U1 ein Federelement vorgeschlagen, welches das Zusammenfalten und Auseinanderfalten einer faltbaren Ladebordwand unterstützt.

Der vorliegenden Erfindung liegt die Aufgabe zugrunde, eine faltbare Ladebordwand zu entwickeln, bei der gewährleistet ist, dass auch nach dem Auffalten die einzelnen Plattformprofile exakt in einer Ebene liegen, und bei der eine Kraft, die zum Falten bzw. Auseinanderfalten benötigt wird, unterstützt wird.

Zur Lösung dieser Aufgabe führt, dass zumindest einer Unterfläche eines Plattformprofiles eine Stützfläche zugeordnet ist, welche bei waagerechter Anordnung des Plattformprofils in einem spitzen Winkel zur Vertikalen verläuft, wobei diese Stützfläche mit einem Keil zusammenwirkt, der sich andererseits gegen eine Gegenfläche abstützt, welche der Unterfläche des anderen Plattformprofils im Bereich der gelenkigen Verbindung zugeordnet ist.

Der wesentliche Vorteil der vorliegenden Erfindung liegt darin, dass bereits bei der Montage der faltbaren Ladebordwand dieser Keil zwischen Stützfläche und Gegenfläche so eingestellt werden kann, dass die beiden Plattformprofile absolut in einer waagerechten Ebene liegen. Dadurch wird vermieden, dass beispielsweise die Spitze der Ladebordwand nach unten hängt. Gleichzeitig wird auch eine Abstützung des nachfolgenden Plattformprofils gewährleistet, so dass insgesamt die Stabilität der faltbaren Ladebordwand verbessert ist.

Nachdem der Keil einmal eingestellt ist, ist daran gedacht, ihn an einer der Flächen, sei es Stützfläche oder Gegenfläche, festzulegen. Dies kann durch ein entsprechendes Befestigungselement oder durch Schweissen oder auf sonst eine beliebige Art und Weise geschehen.

Bevorzugt wird die Stützfläche durch ein Stützprofil ausgebildet, welches, ebenfalls wieder besorzugt, lösbar mit dem Plattformprofil verbunden wird. Hierzu besitzt das Stützprofil eine Profilwand, welche sich im spitzen Winkel weg von der Unterfläche des Plattformprofiles erstreckt. Das freie Ende dieser Profilwand wird durch die oben erwähnte schräge Stützfläche gebildet.

Mit der Profilwand ist wiederum ein Hülsenabschnitt verbunden, wobei von diesem Hülsenabschnitt ein T-förmiger Streifen abragt und in eine Klammer eingreift, die von dem Plattformprofil gebildet wird. Zu diesem Zwecke weist das Plattformprofil stirnwärtig einen Längsschlitz auf, welcher zwei Klammerstreifen voneinander trennt. Jeder Klammerstreifen besitzt einen Haken, mit dem er den T-förmigen Streifen hintergreift. Ein Querstreifen des T-förmigen Streifens greift danach in eine Nut ein, die bevorzugt so geformt ist, dass der Querstreifen beim Zusammenziehen der Klammerstreifen in die Nut eingezogen wird.

Zwischen dem Hülsenabschnitt und der Profilwand ist eine weitere hinterschnittene Nut vorgesehen, in der ein Kopf eines Befestigungselementes angeordnet ist. Bevorzugt durchsetzt dieses Befestigungselement die beiden Klammerstreifen und greift anderenends des Kopfes in eine Mutter oder eine entsprechende Gewindebohrung in dem Klammerstreifen ein. Beim Anziehen dieses Befestigungselementes werden die beiden Klammerstreifen zueinander gezogen, so dass auf diese Art und Weise eine Halterung des gesamten Stützprofiles geschehen kann.

Bevorzugt soll das Gegenprofil identisch mit dem Stützprofil ausgestaltet sein. Deshalb bietet es sich an, Stützprofil und Gegenprofil von einem entsprechend stranggegossenen Aluminiumprofil abzuschneiden.

Das Stützprofil und das Gegenprofil sind aber nur ein Teil der gesamten gelenkigen Verbindung. Zwischen diesem aus Stützprofil und Gegenprofil gebildeten Gelenkteil sind andere Gelenkteile vorgesehen, welche beispielsweise aus Doppelhülsenlaschen oder aber auch aus getrennten Hülsenabschnitten bestehen können, die dann mit entsprechenden T-förmigen Streifen von der Klammer des Plattformprofiles gehalten werden.

Zur Unterstützung beim Zusammenfalten bzw. Auseinanderfalten ist bevorzugt eine Blattfeder vorgesehen, welche randseitig an den Plattformprofilen angeordnet ist. In einem bevorzugten Ausführungsbeispiel sind beidseitig Blattfedern vorgesehen, wobei diese entgegengesetzt zueinander angeordnet sind.

Die Blattfeder steckt mit einem Ende in einem Schlitz eines Drehteiles und greift mit einem anderen Ende in einen Schlitz eines weiteren Drehteiles ein. Dabei kann ein Drehteil mit einem Plattformprofil und das andere Drehteil mit einem Gelenkteil verbunden sein. Denkbar sind auch andere Anordnungen und sollen von der vorliegenden Erfindung umfasst sein.

Damit die Blattfeder nicht aus den Schlitzen herausrutscht, ist daran gedacht, ein Ende der Blattfeder mit einem Drehteil fest zu verbinden, während das andere Ende der Blattfeder in dem Schlitz des anderen Drehteiles gleiten kann. Hierdurch werden Längenunterschiede beim Falten der Plattformprofile ausgeglichen.

In einem bevorzugten Ausführungsbeispiel ist daran gedacht, die Blattfedertätigkeit noch durch einen Drehstab zu unterstützen, der durch das Gelenk zwischen den beiden Plattformprofilen hindurchgesteckt ist. Dabei kann dieser Drehstab drehfest im Gelenk festliegen, er kann jedoch auch die beiden sich gegenüber liegenden Blattfedern miteinander verbinden. Hierdurch entsteht ein Doppelgelenk, wodurch die Tätigkeit des Fahrers beim Zusammenfalten und Auseinanderfalten der Ladebordwand ganz erheblich unterstützt wird.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Teil einer ausgefalteten Ladebordwand;
Figur 2 eine Seitenansicht des Teils der Ladebordwand gemäss Figur 1 in Faltlage;
Figur 3 eine Seitenansicht der Ladebordwand gemäss Figur 1 beim Auffalten;
Figur 4 eine Seitenansicht der Ladebordwand gemäss Figur 1;
Figur 5 eine Draufsicht auf den Teil der Ladebordwand gemäss Figur 4;
Figur 6 bis Figur 8 Querschnitte durch die Ladebordwand gemäss Figur 1 entlang Linie A - A in verschiedenen Gebrauchslagen;
Figuren 9 bis 11 Querschnitte durch die Ladebordwand gemäss Figur 1 entlang Linie B - B in verschiedenen Gebrauchslagen;
Figuren 12 bis 14 Querschnitte durch die Ladebordwand gemäss Figur 1 entlang Linie C - C in verschiedenen Gebrauchslagen.

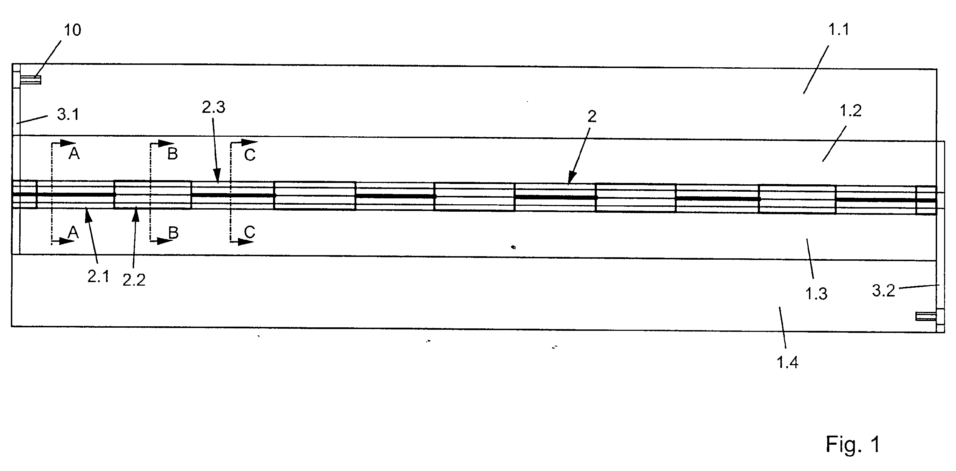

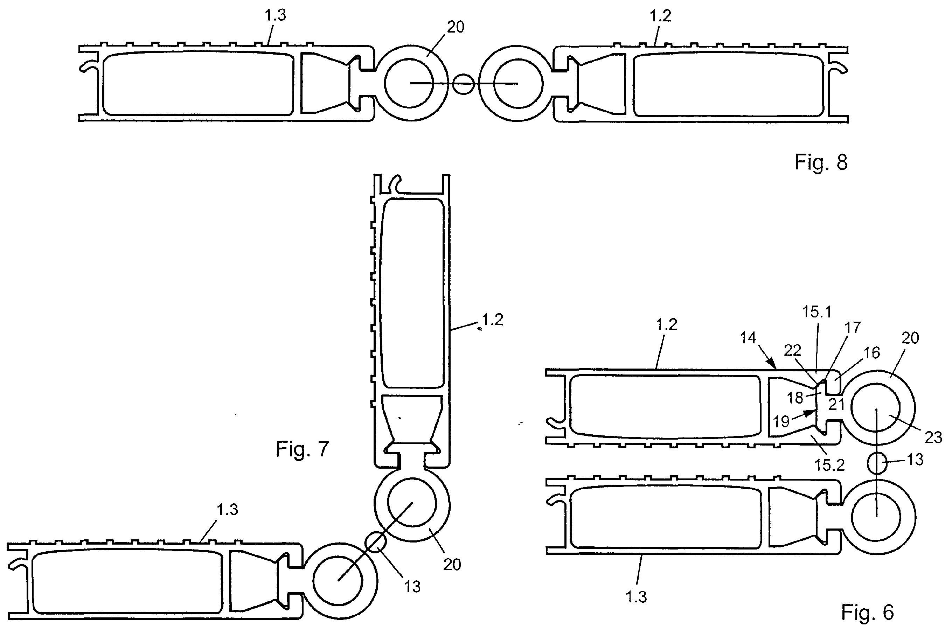

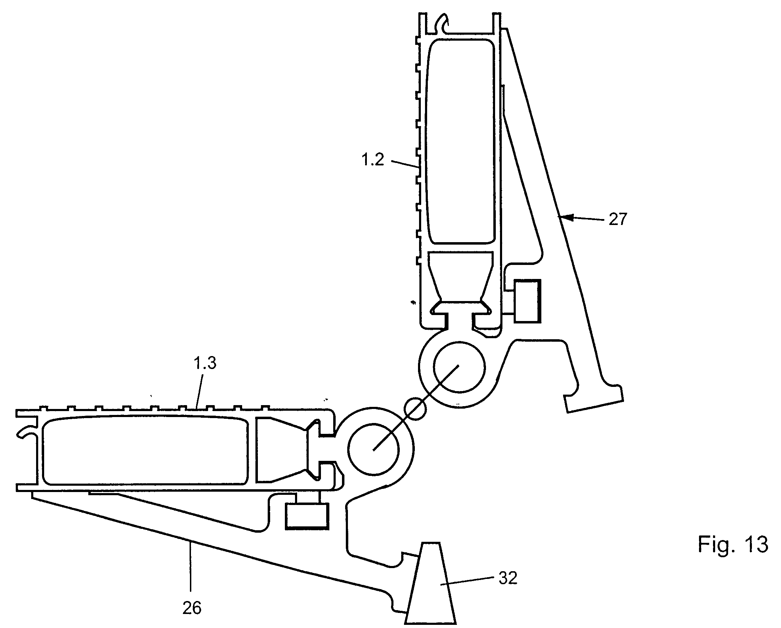

In Figur 1 sind von einer Ladebordwand insgesamt vier Plattformprofile 1.1 bis 1.4 gezeigt, wobei die beiden Plattformprofile 1.2 und 1.3 miteinander eine gelenkige Verbindung eingehen. Die gelenkige Verbindung wird insgesamt mit 2 gekennzeichnet, besteht jedoch aus verschiedenen Varianten, die in den Figuren 6 bis 14 näher beschrieben sind.

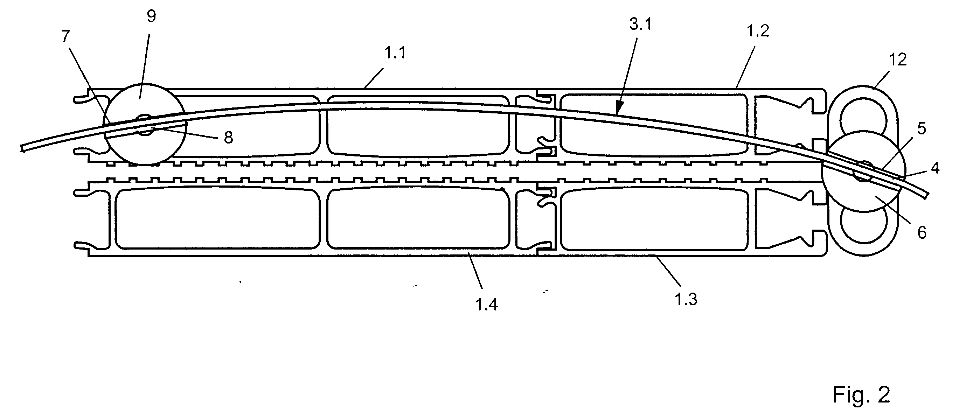

Zur Unterstützung des Zusammenfaltens bzw. des Auffaltens der Ladebordwand ist jeweils seitlich eine Blattfeder 3.1 bzw. 3.2 vorgesehen. Die Anordnung und Wirkungsweise dieser Blattfeder 3.1 bzw. 3.2 wird in den Figuren 2 bis 5 näher beschrieben.

Die Blattfeder 3.1 steckt mit einem Ende 4 in einem Schlitz 5 eines Drehteils 6. Mit ihrem anderen Ende 7 steckt die Blattfeder 3.1 in einem weiteren Schlitz 8 eines weiteren Drehteiles 9. Dabei ist vorgesehen, dass das Ende 4 der Blattfeder 3.1 in dem Schlitz 5 festgelegt ist, während das andere Ende 7 der Blattfeder 3.1 in dem Schlitz 8 gleiten kann. Selbstverständlich ist auch eine umgekehrte Anordnung möglich.

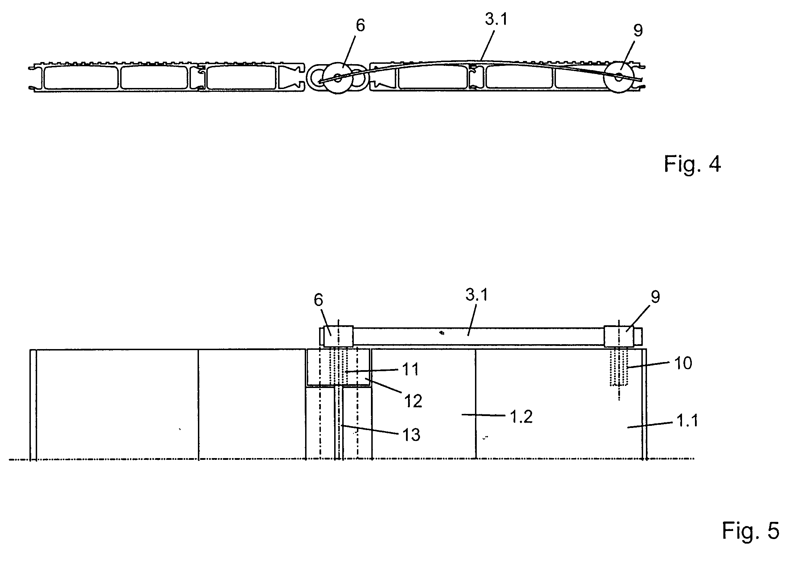

Das Drehteil 9 sitzt in dem Profil 1.1 und kann in diesem Profil in beschränktem Umfange drehen. Hierzu ragt von dem Drehteil 9 ein nur gestrichelt angedeutetes Steckteil 10 ab, welches in dem Plattformteil 1.1 sitzt (siehe Figur 5).

Auch von dem Drehteil 6 ragt ein gestrichelt angedeutetes Steckteil 11 ab, welches in einer Gelenklasche 12 sitzt und bevorzugt in der Gelenklasche 12 drehen kann. Dieses Steckteil 11 kann zusätzlich mit einem Drehstab 13 verbunden sein, der mit einem übrigen Gelenkteil drehfest verbunden ist.

Die Funktionsweise der vorliegenden Erfindung ist folgende:

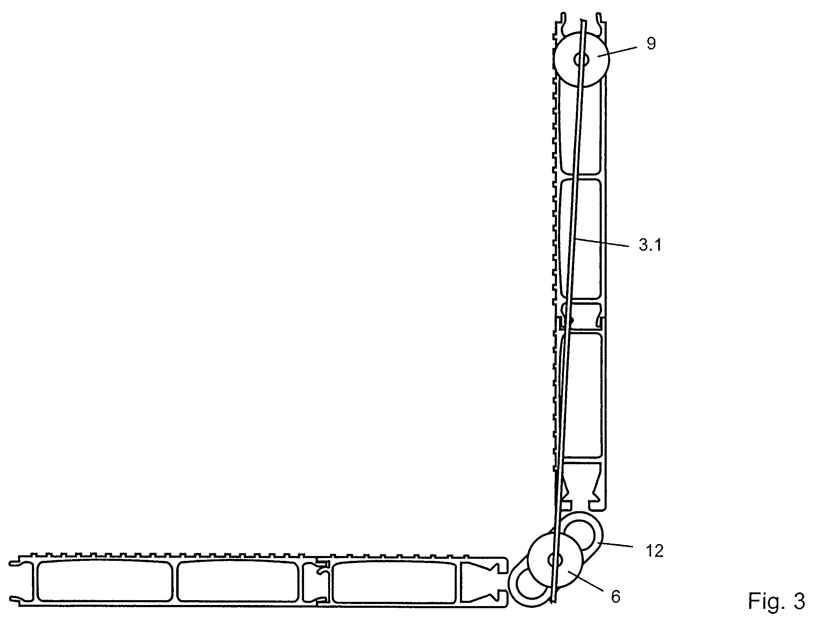

Eine neutrale Federstellung ist in Figur 3 gezeigt. In dieser Stellung ist die Blattfeder 3.1 entspannt, liegt einends in dem Drehteil 6 fest und steckt anderenends in dem Drehteil 9, wobei sie in diesem Drehteil 9 gleiten kann.

Wird die Ladebordwand gefaltet, so geschieht dies um die Gelenklasche 12, wobei die Blattfeder 3.1, wie in Figur 2 gezeigt, vorgespannt wird. Je mehr der Faltzustand erreicht wird, umso mehr erfolgt eine Spannung der Blattfeder 3.1, d.h. umso mehr wird das Gewicht der Plattformprofile 1.1 und 1.2 unterstützt, wodurch gleichzeitig die Tätigkeit der die Plattform faltenden Person unterstützt wird.

Das Gleiche gilt auch gemäss Figur 4 beim Auffalten der Ladebordwand. Auch hier wird die Blattfeder 3.1 umso mehr vorgespannt, je weiter der Auffaltzustand fortschreitet.

An die Gelenklasche 12 schliesst ein Gelenkteil 2.1 an, welches in den Figuren 6 bis 8 gezeigt ist. Die Plattformprofile 1.2 und 1.3 weisen durchgängig stirnseitig zueinander eine Klammer 14 auf, die aus zwei Klammerstreifen 15.1 und 15.2 gebildet ist, die identisch ausgebildet sind. Jeder Klammerstreifen 15.1 bzw. 15.2 weist endwärtig einen Hakenstreifen 16 auf, an den sich eine Nut 17 anschliesst.

Bei dem Gelenkteil 2.1 ist nun in die Nut 17 ein Querstreifen 18 eines T-förmigen Streifens 19 eingesetzt, der einem Hülsenabschnitt 20 angeformt ist. Der Klammerstreifen 15.1 bzw 15.2 hintergreift mit dem Hakenstreifen 16 den Querstreifen 18, während der Querstreifen 18 mit einer Schrägfläche 21 entlang einer schrägen Nutwand 22 in die Nut 17 eingezogen wird. Hierdurch wird die Halterung des T-förmigen Streifens 19 wesentlich verbessert.

In Gebrauchslage ist im übrigen durch die Zentralöffnung 23 des Hülsenabschnittes 20 ein Stab gesteckt, der die gesamten Hülsenabschnitte der gelenkigen Verbindung 2 und auch die Gelenklaschen 12 verbindet.

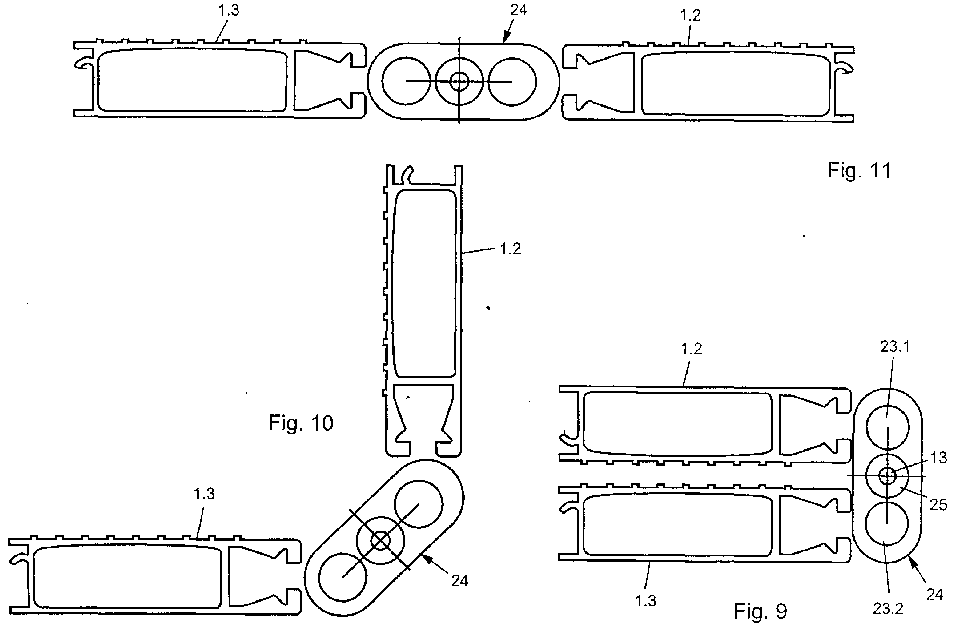

Neben dem Gelenkteil 2.1 ist ein weiteres Gelenkteil 2.2 vorgesehen, welches in den Figuren 9 bis 11 dargestellt ist. Dieses Gelenkteil besteht aus einer Gelenklasche 24, ähnlich oder gleich der Gelenklasche 12. Sie weist eine mittige Zentralbohrung 25 auf, durch welche der Drehstab 13 hindurch gesteckt ist. Beidseits der Zentralbohrung 25 befindet sich jeweils eine Zentralöffnung 23.1 und 23.2 zur Aufnahme von entsprechenden Stäben.

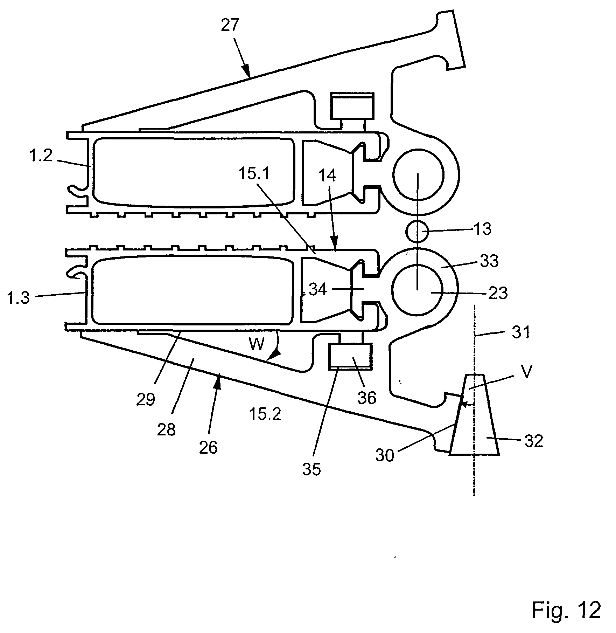

Diese Gelenklasche ist nicht direkt mit den Plattformprofilen 1.2 und 1.3 verbunden. Sie dreht aber, wie in den Figuren 10 und 11 gezeigt, beim Auffalten der Ladebordwand mit.

Ein wesentliches Augenmerk ist nun wiederum auf ein drittes Gelenkteil 2.3 zu richten, welches in den Figuren 12 bis 14 näher gezeigt ist. Hier ist dem jeweiligen Plattformprofil 1.2 bzw. 1.3 ein Stützprofil 26 bzw. ein Gegenprofil 27 zugeordnet, die bevorzugt identisch ausgebildet sind. Das Stützprofil 26 bzw. Gegenprofil 27 weist eine Profilwand 28 auf, welche in einem spitzen Winkel w zur Unterfläche 29 des Plattformprofils 1.3 verläuft. Am freien Ende der Profilwand 28 ist eine Stützfläche 30 ausgebildet, welche in einem Winkel v schräg zu einer Vertikalen 31 verläuft. Dieser Stützfläche 30 ist ein Keil 32 aufgesetzt.

Des weiteren ist mit der Profilwand 28 ein Hülsenabschnitt 33 verbunden, dem wiederum ein T-förmiger Streifen 34 angeformt ist, der von der oben beschriebenen Klammer 14 gehalten wird.

Zwischen dem Hülsenabschnitt 33 und der Profilwand 28 befindet sich eine hinterschnittene Nut 35, in welcher ein entsprechend geformter Kopf 36 eines Befestigungselementes aufgenommen ist. Dieses Befestigungselement 36 ist bevorzugt ein Schraubenbolzen, welcher die beiden Klammerstreifen 15.1 und 15.2 der Klammer 14 durchsetzt und anderenends in eine Mutter oder eine Gewindebohrung in dem Klammerstreifen 15.1 eingreift. Wird dieses Befestigungselement angezogen, so schliesst gleichzeitig die Klammer 14 und legt den T-förmigen Streifen 34 und damit das gesamte Stützprofil 26 bzw. Gegenprofil 27 fest.

Die Funktionsweise dieses Teils der Erfindung ist folgende:

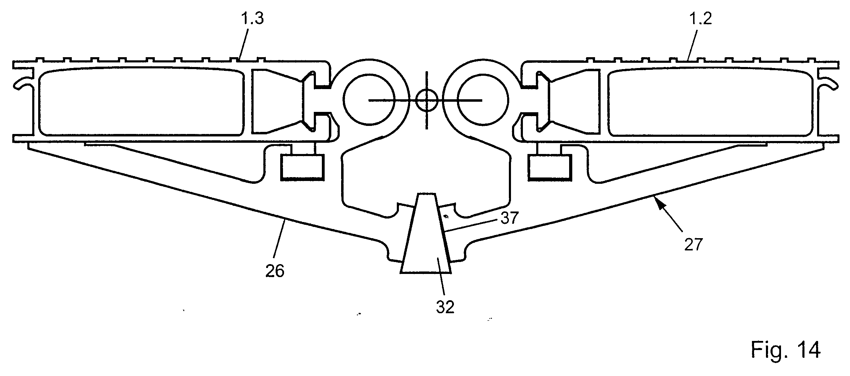

In Figur 14 ist die Ladebordwand geöffnet gezeigt. Dabei stützt sich das Gegenprofil 27 mit einer Gegenfläche 37 an dem Keil 32 ab. Der Keil 32 ist so eingestellt, dass die beiden Plattformprofile 1.3 und 1.2 in einer Ebene liegen.

Sollte sich bei der Montage der Ladebordwand herausstellen, dass die beiden Plattformprofile 1.3 und 1.2 nicht in einer Ebene liegen, so kann dieser Fehler durch Verschieben des Keiles 32 korrigiert werden, bevor der Keil 32 an dem Stützprofil 26 festgelegt wird.

In Figur 1 ist im übrigen erkennbar, dass sich der Drehstab 13 von einer Blattfeder 3.1 zur anderen Blattfeder 3.2 erstrecken kann.

## Patentansprüche

1. Faltbare Ladebordwand aus zumindest zwei Plattformprofilen (1.2, 1.3), welche gelenkig miteinander verbunden sind,
**dadurch gekennzeichnet,**
**dass** zumindest einer Unterfläche (29) eines Plattformprofils (1.3) eine Stützfläche (30) zugeordnet ist, welche bei waagerechter Anordnung des Plattformprofils (1.3) in einem spitzen Winkel (v) zur Vertikalen (31) verläuft, wobei diese Stützfläche (30) mit einem Keil (32) zusammenwirkt, der sich andererseits gegen eine Gegenfläche (37) abstützt, welche der Unterfläche des anderen Plattformprofils (1.2) im Bereich der gelenkigen Verbindung (2) zugeordnet ist.

2. Ladebordwand nach Anspruch 1, **dadurch gekennzeichnet, dass** der Keil (32) an der Stützfläche (30) oder der Gegenfläche (37) festgelegt ist.

3. Ladebordwand nach Anspruch 1 oder 2, **dadurch gekennzeichnet, dass** auch die Gegenfläche (37) in einem spitzen Winkel zur Vertikalen (31) verläuft, wenn beide Plattformprofile (1.2, 1.3) in waagerechter Gebrauchslage sind.

4. Ladebordwand nach einem der Ansprüche 1 - 3, **dadurch gekennzeichnet, dass** die Stützfläche (30) von einem Stützprofil (26) gebildet ist, welches sich gegen die Unterfläche (29) des Plattformprofils (1.3) abstützt.

5. Ladebordwand nach Anspruch 4, **dadurch gekennzeichnet, dass** die Gegenfläche (37) von einem Gegenprofil (27) gebildet ist, welches im wesentlichen identisch mit dem Stützprofil (26) ausgebildet ist.

6. Ladebordwand nach Anspruch 4 oder 5, **dadurch gekennzeichnet, dass** Stützfläche (30) und/oder Gegenfläche (37) an einem Ende einer Profilwand (28) vorgesehen sind, deren anderes Ende im spitzen Winkel (w) auf die Unterfläche (29) des Plattformprofils (1.3) auftrifft.

7. Ladebordwand nach einem der Ansprüche 4 - 6, **dadurch gekennzeichnet, dass** der Profilwand (28) ein Hülsenabschnitt (33) für die gelenkige Verbindung zugeordnet ist und mit diesem zusammen das Stütz- bzw. Gegenprofil (26, 27) ausbildet.

8. Ladebordwand nach wenigstens einem der Ansprüche 4 - 7, **dadurch gekennzeichnet, dass** das Stützprofil (26) und/oder das Gegenprofil (27) lösbar mit dem entsprechenden Plattformprofil (1.2, 1.3) verbunden ist.

9. Ladebordwand nach Anspruch 8, **dadurch gekennzeichnet, dass** zwischen Profilwand (28) und Hülsenabschnitt (33) eine hinterschnittene Nut (35) zur Aufnahme eines Kopfes (36) eines Befestigungselementes vorgesehen ist.

10. Ladebordwand nach Anspruch 8 oder 9, **dadurch gekennzeichnet, dass** von dem Hülsenabschnitt (33) ein T-förmiger Streifen (34) abragt und in eine Klammer (14) eingreift, die von dem Plattformprofil (1.2, 1.3) stirnwärtig gebildet ist.

11. Ladebordwand nach Anspruch 10, **dadurch gekennzeichnet, dass** zwei Klammerstreifen (15.1, 15.2), welche die Klammer (14) ausbilden, von dem Befestigungselement zum Festlegen des T-förmigen Streifens (34) zusammengezogen sind.

12. Ladebordwand nach Anspruch 11, **dadurch gekennzeichnet, dass** zur Festlegung des T-förmigen Streifens (34) in jedem Klammerstreifen (15.1, 15.2) eine Nut (17) und daran anschliessend ein Hakenstreifen (16) ausgebildet ist, welcher den Querstreifen (18) des T-förmigen Streifens (34) hintergreift.

13. Ladebordwand nach wenigstens einem der Ansprüche 4 - 12, **dadurch gekennzeichnet, dass** zur gelenkigen Verbindung (2.2) der Plattformprofile Doppelhülsenlaschen (24) vorgesehen sind.

14. Ladebordwand nach wenigstens einem der Ansprüche 4 - 13, **dadurch gekennzeichnet, dass** zur gelenkigen Verbindung (2.1) der Plattformprofile (1.2, 1.3) Hülsenabschnitte (20) vorgesehen sind, von denen T-förmige Streifen (19) abragen und in Klammern (14) eingreifen, die von den Plattformprofilen (1.2, 1.3) stirnwärtig gebildet sind.

15. Faltbare Ladebordwand aus zumindest zwei Plattformprofilen (1.2, 1.3), welche über ein Gelenk (2) miteinander verbunden sind, **dadurch gekennzeichnet, dass** den Plattformprofilen (1.2, 1.3) eine Blattfeder (3) zugeordnet ist.

16. Faltbare Ladebordwand aus zumindest zwei Plattformprofilen (1.2, 1.3), welche über ein Gelenk (2) miteinander verbunden sind, **dadurch gekennzeichnet, dass** in einer gelenkigen Verbindung (2) der beiden Plattformprofile (1.2, 1.3) ein Drehstab (13) angeordnet ist.

17. Faltbare Ladebordwand nach Anspruch 16, **dadurch gekennzeichnet, dass** der Drehstab (13) ein Mehrkant ist, welcher in zumindest einer Gelenklasche steckt und anderenends drehfest mit einem der Plattformprofile verbunden ist.

18. Ladebordwand nach Anspruch 15, **dadurch gekennzeichnet, dass** die Blattfeder (3) mit einem Ende (7) mit einem Plattformprofil (1.1) und mit dem anderen Ende (4) mit einem Teil des Gelenkes (2) verbunden ist.

19. Ladebordwand nach Anspruch 18, **dadurch gekennzeichnet, dass** die Blattfeder (3) einends an dem Plattformprofil (1.1) oder an dem Gelenkteil (2) festgelegt ist.

20. Ladebordwand nach Anspruch 18 oder 19, **dadurch gekennzeichnet, dass** die Blattfeder (3) zumindest einends mit einem Drehteil (6, 9) verbunden ist.

21. Ladebordwand nach Anspruch 20, **dadurch gekennzeichnet, dass** in dem Drehteil (6, 9) ein Schlitz (5, 8) zur Aufnahme der Blattfeder (3) vorgesehen ist.

22. Ladebordwand nach Anspruch 20 oder 21, **dadurch gekennzeichnet, dass** ein Drehteil (9) in dem Plattformprofil (1.1) und das andere Drehteil (6) in dem Gelenk (12) angeordnet ist.

23. Ladebordwand nach Anspruch 22, **dadurch gekennzeichnet, dass** das Drehteil (6) in dem Gelenk (12) mit einem Drehstab (13) verbunden ist, welcher in dem Gelenk (2) festliegt.

24. Ladebordwand nach Anspruch 23, **dadurch gekennzeichnet, dass** der Drehstab (18) das gesamte Gelenk (2) durchzieht und jeweils endwärtig mit einer entgegengesetzt angeordneten Blattfeder (3.1, 3.2) verbunden ist.
